Europäisches Patentamt

European Patent Office

Office européen des brevets

(19)

(11) Numéro de publication : **0 601 920 A1**

# (12) DEMANDE DE BREVET EUROPEEN

(21) Numéro de dépôt : **93402936.4**

(51) Int. Cl.⁵ : **G01L 5/04**, G01D 5/24

(22) Date de dépôt : **03.12.93**

(30) Priorité : **07.12.92 FR 9214703**

(43) Date de publication de la demande :
**15.06.94 Bulletin 94/24**

(84) Etats contractants désignés :
**BE CH DE IT LI NL**

(71) Demandeur : **COMMISSARIAT A L'ENERGIE ATOMIQUE**
**31-33, rue de la Fédération**
**F-75015 Paris (FR)**

(72) Inventeur : **Barat, Eric**
**43, Avenue des Gobelins**
**F-75013 Paris (FR)**
Inventeur : **Salles, André**
**18, rue du Pont de Poissy**
**F-78370 Plaisir (FR)**

(74) Mandataire : **Dubois-Chabert, Guy et al**
**c/o BREVATOME**
**25, rue de Ponthieu**
**F-75008 Paris (FR)**

(54) **Procédé et dispositif de mesure sans contact de la tension et de la vitesse de défilement d'un fil.**

(57)    Procédé et ses dispositifs de mesure sans contact de la tension et/ou de la vitesse de défilement d'un fil isolant.

Ce procédé consiste à traiter le signal C1-C2, où C1 et C2 sont les capacités d'un doublet capacitif. Pour le dispositif de mesure de la tension du fil, le doublet (3) est défini par un couple d'électrodes (4a/4b) de même dimension et de forme triangulaire et par une électrode commune (2), le traitement consistant à extraire la fréquence de vibration du fil entre deux appuis, par une analyse spectrale.

Le dispositif de mesure de la vitesse comprend deux doublets (13, 17) définis chacun par un couple d'électrodes rectangulaires (14a/14b, 18a/18b) et une électrode commune (12, 16), le traitement consistant à extraire le temps de passage, entre les deux doublets, des irrégularités microscopiques du fil, par une intercorrélation.

Application au domaine du textile et notamment à la filature de fils textiles.

FIG. 4

EP 0 601 920 A1

L'invention concerne un procédé, et ses dispositifs de mise en oeuvre, permettant de mesurer la tension et/ou la vitesse de défilement d'un fil isolant sans aucun contact avec ledit fil. Ce dispositif trouve de nombreuses applications dans tous les domaines nécessitant la connaissance de la valeur de la tension ou de la vitesse de défilement d'un fil isolant. De façon plus particulière, l'invention s'applique au domaine du textile et, notamment, à la filature des fils textiles.

Il existe, de nos jours, différents procédés pour déterminer la vitesse de défilement d'un fil. L'un de ces procédés consiste à évaluer la vitesse linéaire du fil à partir du rayon de la poulie à gorge servant de guide-fil et du nombre de tours par seconde effectués autour de ladite poulie à gorge.

Un tel procédé a pour principal inconvénient d'introduire des erreurs importantes sur la mesure lorsque la poulie à gorge est usée. En outre, il ne permet pas de tenir compte des glissements possibles du fil sur ladite poulie à gorge.

Un autre procédé connu permet de mesurer les tensions d'une structure textile tendue sur un site. Un tel procédé consiste à envoyer un signal sinusoïdal d'excitation sur une surface circulaire de textile et à mesurer la réponse en déplacement à l'aide d'un capteur sans contact. Une courbe de fonction de transfert (ou signature spectrale) peut alors être déduite. Ce procédé est décrit, de façon plus précise, dans l'article intitulé "Mesurer les tensions au coeur du tissu", rédigé par Jean-Yves CATHERIN et paru dans la publication BUREAUX D'ETUDES, n° 76. Mais ce procédé ne s'applique qu'aux structures tissées.

La présente invention a donc pour avantage de proposer un procédé et ses dispositifs de mise en oeuvre permettant de mesurer l'un ou l'autre de la vitesse de défilement du fil et de la tension dudit fil ou les deux de façon simultanée, tout en remédiant aux inconvénients des procédés connus, précédemment décrits.

De façon plus précise, l'invention concerne un procédé de mesure sans contact de la tension et/ou de la vitesse de défilement d'un fil isolant à l'aide d'un capteur sans contact, caractérisé en ce que, ce capteur comprenant des premiers et seconds moyens conducteurs plans séparés par une couche d'air de permittivité p dans laquelle défile le fil, il consiste à déterminer des perturbations de la permittivité de la couche d'air dûes à des fluctuations de masse linéique et de position du fil lors de son défilement dans ladite couche d'air.

Un premier dispositif de mise en oeuvre de ce procédé est un dispositif de mesure sans contact de la tension d'un fil isolant. Selon ce dispositif, les premiers moyens conducteurs plans comportent une électrode commune et les seconds moyens conducteurs plans comportent une paire d'électrodes formant avec l'électrode commune, un doublet capacitif de capacités respectives C1 et C2, cette paire d'électrodes comportant une première et une seconde électrodes ayant chacune une forme de triangle rectangle complémentaire l'une de l'autre.

Avantageusement, ce dispositif comporte des moyens de traitement pour déterminer, par une analyse spectrale d'un signal $\dfrac{C1 - C2}{C1 + C2}$, une fréquence de vibration du fil défilant dans la couche d'air située, respectivement, entre l'électrode commune et la première électrode de capacité C1 et entre l'électrode commune et la seconde électrode de capacité C2.

Un second dispositif de mise en oeuvre de ce procédé est un dispositif de mesure sans contact de la vitesse de défilement d'un fil isolant. Selon ce dispositif, les premiers moyens conducteurs plans comportent au moins deux électrodes communes et les seconds moyens conducteurs plans comportent une première et une seconde paires d'électrodes formant, avec leur électrode commune respective, un premier et un second doublets capacitifs disposés parallèlement et à une distance D l'un de l'autre, chaque électrode desdites paires d'électrodes étant de forme rectangulaire, positionnée perpendiculairement à la direction de défilement du fil.

De façon avantageuse, ce dispositif comporte des moyens de traitement pour déterminer la vitesse V de défilement définie par V=D/$\Delta$T où $\Delta$T est un décalage temporel entre un premier signal aléatoire x(t) engendré par le premier doublet capacitif et un second signal aléatoire y(t) engendré par le second doublet capacitif et est déterminé à partir d'une relation d'intercorrélation Cxy(T) entre les premiers et seconds signaux aléatoires définie par Cxy(T)=Cxx(T-$\Delta$T).

Un troisième dispositif de mise en oeuvre de ce procédé est un dispositif de mesure sans contact de la tension et de la vitesse de défilement d'un fil isolant. Selon ce dispositif, les premiers moyens conducteurs plans comportent une première, une seconde et une troisième électrodes communes et les seconds moyens conducteurs plans comportent une première, une seconde et une troisième paires d'électrodes, chaque paire d'électrodes formant, avec son électrode commune respective, un premier, un second et un troisième doublets capacitifs, les électrodes des premier et troisième doublets capacitifs étant de forme rectangulaire, positionnés perpendiculairement à la direction de défilement du fil et étant apte à assurer, à l'aide de moyens de traitement, la détermination de la vitesse de défilement dudit fil, les électrodes du second doublet capacitif disposé entre le premier et le troisième doublets capacitifs ayant chacune une forme de triangle rectangle complémentaire l'un de l'autre et étant apte à assurer, à l'aide des moyens de traitement, la détermination de la tension du fil.

De plus, selon ce dispositif, la première, la seconde et la troisième électrodes communes sont réalisées sur un même premier substrat et la première, la seconde et la troisième paires d'électrodes sont réalisées sur un même second substrat.

De même, les premiers et seconds moyens conducteurs plans des premier, second et troisième dispositifs de mise en oeuvre peuvent être sérigraphiés sur un verre époxy.

D'autres caractéristiques et avantages de l'invention apparaitront au cours de la description qui va suivre, donnée à titre illustratif, mais nullement limitatif, en référence aux dessins dans lesquels :

- la figure 1 représente une vue en perspective du dispositif de mesure sans contact de la tension du fil isolant ;
- la figure 2 est une représentation, vue de face, de ce même dispositif sur laquelle sont montrées les vibrations du fil lors de son défilement ;
- la figure 3 représente une vue en perspective du dispositif de mesure sans contact de la vitesse de défilement du fil isolant ;
- la figure 4 représente une vue en perspective du dispositif complet, c'est-à-dire du dispositif permettant de mesurer sans contact la tension et la vitesse de défilement du fil isolant ; et
- la figure 5 représente le synoptique de ce dernier dispositif.

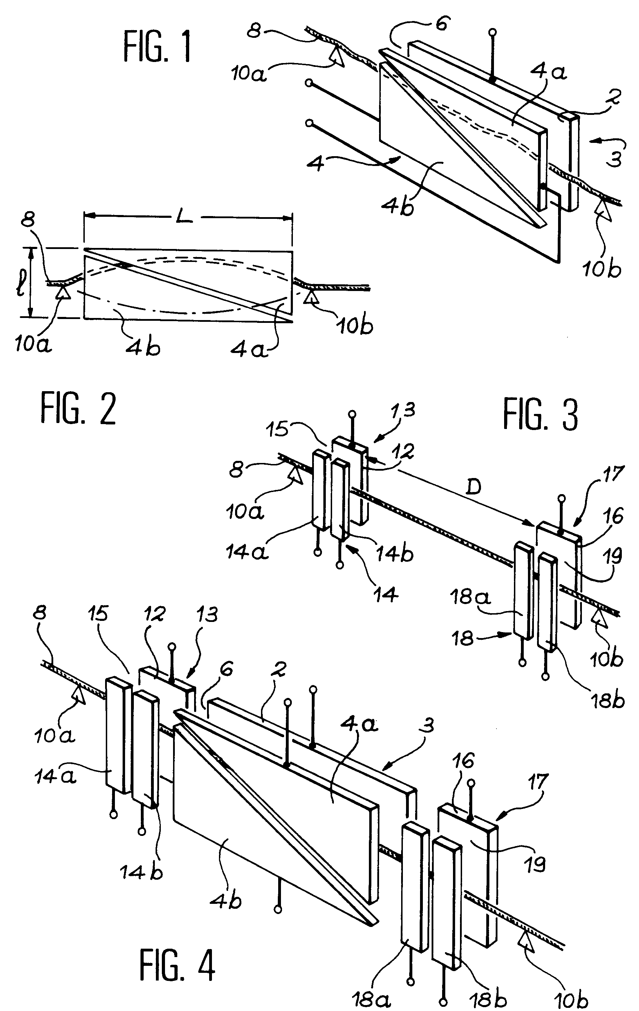

Sur la figure 1, on a représenté le dispositif permettant de mesurer, sans contact, la tension d'un fil isolant lors de son défilement. On voit sur cette figure un capteur comportant deux moyens conducteurs plans 2 et 4 séparés par une couche d'air 6 (c'est-à-dire une couche diélectrique). Entre ces deux moyens conducteurs plans 2 et 4, circule le fil isolant 8. Ces deux moyens conducteurs plans 2 et 4 forment ensemble des capacités à air. Aussi, le procédé selon l'invention consiste à analyser la perturbation de la permittivité de la couche d'air 6 dûe au défilement du fil 8 dans ladite couche d'air. En effet, les fluctuations aléatoires de la masse linéique du fil 8 se déplaçant dans la couche d'air 6 engendrent, au cours du temps, des variations aléatoires sur la valeur de la capacité réalisée par les moyens conducteurs plans 2 et 4.

De façon avantageuse, les moyens conducteurs plans 4 comportent deux électrodes 4a et 4b qui ont chacune la forme d'un triangle rectangle. Ces deux triangles rectangles 4a et 4b sont complémentaires l'un de l'autre et leurs hypoténuses sont le plus proche possible, sans toutefois être collées, l'une à l'autre. L'existence de ces deux électrodes 4a et 4b a pour avantage de permettre une mesure de la différence sur la somme de deux capacités C1 et C2 (relatives aux deux électrodes 4a et 4b) de même dimension, ce qui permet de détecter de faibles variations relatives de capacité.

Les moyens conducteurs plans 2 sont réalisés également par une électrode 2 appelée par la suite électrode commune. La structure constituée par les deux électrodes 4a et 4b et par l'électrode commune 2 sera appelée, dans la suite de la description, doublet capacitif, et sera référencée 3.

Les deux électrodes 4a et 4b sont sérigraphiées à proximité l'une de l'autre sur le même substrat. L'électrode 4a est alimentée par une tension -V et l'électrode 4b par une tension +V. L'électrode commune 2 prend alors le potentiel Vs par rapport à la masse.

Le procédé selon l'invention consiste à étudier les fréquences propres d'oscillations du fil lorsqu'il est tendu entre deux points fixes pour en déterminer sa tension. En effet, de par son défilement, le fil vibre sans excitation externe. On accentue, cependant, cette vibration en guidant le fil à travers d'éventuels points fixes. Ces points fixes peuvent être, selon un mode de réalisation, des poulies à gorge ou un guide en V. En outre, ces points fixes servent à empêcher tout contact entre le fil et l'une quelconque des électrodes, contact qui serait susceptible de nuire à l'oscillation libre du fil.

Ces points fixes sont représentés sur la figure 1, de façon très schématique, par des triangles référencés 10a et 10b.

On obtient, du doublet capacitif 3, un signal dont on calcule le spectre. Ce spectre fait apparaître le fondamental et les harmoniques du signal. Une analyse spectrale par modélisation paramétrique permet de retrouver la tension du fil.

En effet, au cours de ses vibrations, le fil 8 se situera en majorité, tantôt dans l'espace entre l'électrode commune 2 et l'électrode 4a, c'est-à-dire dans la capacité C1, tantôt dans l'espace entre l'électrode commune 2 et l'électrode 4b, c'est-à-dire dans la capacité C2. Cette situation du fil 8 dans l'un ou l'autre des espaces du doublet capacitif 3 s'alterne toutes les demi-périodes. Cet effet d'alternance se produit aussi bien pour le fondamental que pour certaines harmoniques du signal. Aussi, le signal obtenu en sortie du doublet 3, à savoir le signal $\frac{C1 - C2}{C1 + C2}$, est modulé en fonction des fréquences propres d'oscillations et donc en fonction de la tension du fil 8.

Sur la figure 2, on a représenté, selon une vue de face, ce fil 8 lorsqu'il vibre dans l'espace 6 entre l'électrode commune 2 et les électrodes 4a et 4b. Par un double trait pointillé, on a représenté ce fil 8 lorsqu'il est en majorité situé dans l'espace entre l'électrode commune 2 et l'électrode 4a, ce qui correspond à la capacité C1. En traits mixtes, on a représenté la position du fil 8 lorsqu'il vibre et qu'il est en majorité dans l'espace situé entre l'électrode commune 2 et l'électrode 4b, ce qui correspond à la capacité C2. Sur cette figure, on a également représenté les guides fils 10a et 10b qui permettent d'accentuer la vibration naturelle du fil 8.

On comprendra, bien sûr, que pour obtenir une meilleure sensibilité des vibrations du fil 8 dans l'espace 6 entre les électrodes 2 et 4a/4b, il est intéressant que l'espace entre les hypoténuses des électrodes 4a et 4b soit le plus petit possible.

Dans ce cas, la valeur de capacité C1 et C2 à vide est :

$$C1 = C2 = \frac{po.pr.1.1}{2.e},$$

où po et pr sont respectivement la permittivité du vide, la permittivité relative du milieu ambiant(voisine de 1 quand le milieu ambiant est l'air) et e est l'écart entre l'électrode commune 2 et les électrodes 4a et 4b.

Sur la figure 3, on a représenté le dispositif permettant de mesurer sans contact la vitesse de défilement du fil 8.

Ce dispositif comporte deux doublets capacitifs 13 et 17 séparés d'une distance fixe D. Tout comme dans la description de la figure 1, chaque doublet 13 et 17 comporte deux moyens conducteurs plans respectivement 12, 14 et 16, 18, séparés par une couche d'air respectivement référencée 15 et 19.

De façon plus précise, les moyens conducteurs plans 14 comportent deux électrodes de forme rectangulaire disposées perpendiculairement à la direction du fil 8. Ces deux électrodes sont référencées 14a et 14b et portées à un potentiel respectif +V et -V.

De même, les moyens conducteurs plans 18 comportent deux électrodes rectangulaires 18a, 18b disposées perpendiculairement à la direction du fil 8 et parallèlement aux électrodes 14a et 14b du doublet 13. Ces électrodes 18a et 18b sont portées respectivement au potentiel -V et +V.

De chaque côté de cet ensemble constitué par les doublets capacitifs 13 et 17, se trouvent des guides fils 10a et 10b dont le rôle a été expliqué précédemment lors de la description de la figure 1.

Lorsque le fil 8 passe dans le premier doublet 13, il engendre un premier signal aléatoire x(t). Le signal aléatoire y(t) est issu du second doublet 17 ; il est identique au signal aléatoire x(t), excepté qu'il comporte un décalage temporel ΔT défini par l'expression ΔT=D/vitesse.

La corrélation des signaux aléatoires x(t) et y(t) s'écrit :

$$Cxy(T) = \frac{1}{To} \int_{0}^{To} x(t).y(t-T).dt.$$

Pour le dispositif particulier de notre invention, y(t) équivaut à x(t- ΔT), ce qui permet de simplifier l'expression donnant la corrélation des signaux aléatoires x(t) et y(t) à l'expression Cxy(T)=Cxx(T- ΔT), le décalage temporel ΔT étant déterminé par la position du pic d'intercorrélation. Lorsque ce décalage temporel a été déterminé, on obtient la vitesse de défilement du fil à partir de l'expression vitesse=D/ ΔT.

Afin de rendre possible la détection de petites irrégularités longitudinales, les électrodes 12, 16, 14a/14b et 18a/18b sont réalisées avec de petites largeurs.

Sur la figure 4, on a représenté le dispositif complet permettant de mesurer à la fois la tension et la vitesse de défilement du fil 8. Ce dispositif comporte le doublet 3 du dispositif pour mesurer la tension du fil et les doublets 13 et 17 du dispositif pour mesurer la vitesse de défilement du fil. Selon ce dispositif, les doublets 13 et 17 sont disposés de part et d'autre du doublet 3. De plus, à chaque extrémité de cet ensemble de doublets 13, 3 et 17, sont disposés des guides fils 10a et 10b.

On comprendra, bien évidemment, que chacun de ces doublets 3, 13 et 17 ne sera pas décrit de façon plus détaillée car identiques aux doublets décrits respectivement dans la figure 1 et dans la figure 3.

De façon avantageuse, les électrodes 14a, 14b, 4a, 4b et 18a et 18b sont réalisées sur un même substrat. De même, les électrodes communes 12, 2 et 16 sont réalisées sur un même substrat. Une telle réalisation a pour avantage, notamment d'être simple à utiliser, mais surtout de compenser de façon automatique d'éventuelles déformations mécaniques qui introduiraient des variations de capacité. Ainsi, toute déformation qui surviendrait et affecterait l'une des capacités d'un doublet porterait de la même façon sur la capacité duale dudit doublet. Ainsi, le système ne perd pas en sensibilité.

Selon un mode de réalisation de l'invention, ces électrodes, en cuivre, sont sérigraphiées sur du verre époxy. Les plaques de verre contenant d'une part les électrodes communes 2, 12 et 16 et d'autre part les électrodes 14a, 14b, 4a, 4b, 18a et 18b sont maintenues à la distance e l'une de l'autre par une plaque isolante (d'épaisseur e) située au-dessous des moyens conducteurs plans. L'assemblage de cet ensemble est réalisé à travers les trois plaques de verre époxy ; les fils électriques de connexion à chacun des doublets sont torsadés ensemble.

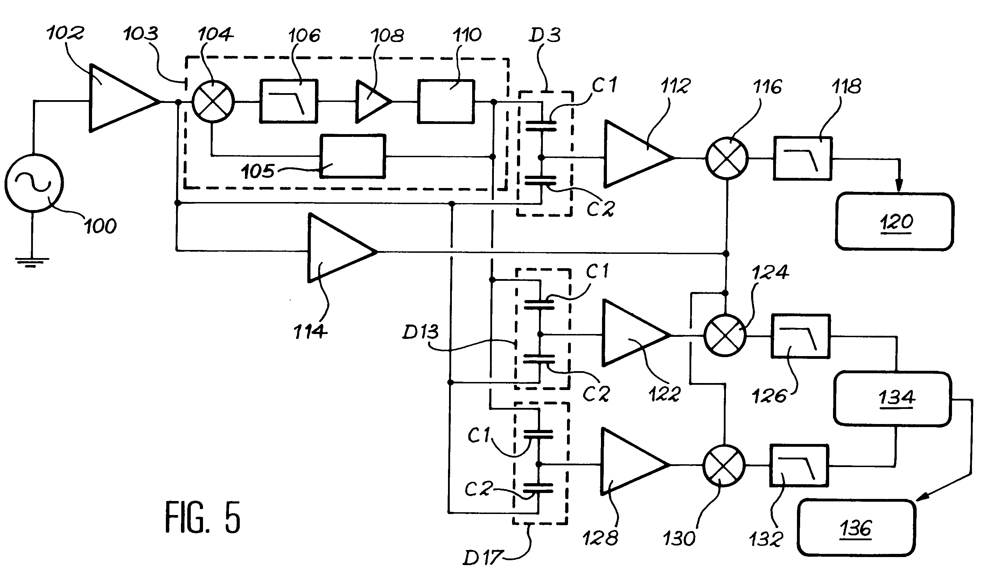

Sur la figure 5, on a représenté, de façon fonctionnelle, le synoptique du dispositif montré sur la figure 4.

Sur cette figure, le générateur sinusoïdal représenté par le bloc 100 alimente l'ensemble du dispositif en signaux sinusoïdaux. Les signaux issus du générateur 100 sont amplifiés par l'amplificateur 102 dont l'entrée est connectée en sortie dudit générateur 100 et dont la sortie est connectée à un mélangeur 104. Le signal issu de l'amplificateur 102 est de la forme V(t)=Sin(Wt) ; il est introduit, via le mélangeur 104, dans un circuit déphaseur de déphasage ∅ = π. Ce circuit déphaseur est réalisé au moyen d'une boucle 103 à verrouillage de phase. Le signal est donc introduit dans la boucle 103 par l'intermédiaire du mélangeur 104 ; il est ensuite filtré grâce à un filtre 106 passe-bas puis à nouveau amplifié par l'amplificateur 108 et enfin appliqué à l'entrée d'un oscillateur contrôlé en tension 110. En sortie de cet oscillateur 110, le signal obtenu a pour valeur -V(t) soit sin(wt+ $\pi$ ). Ce signal -V(t) est introduit dans le retour de la boucle 103 pour subir en 105 le déphasage de valeur $\pi$ avant d'être réintroduit dans le mélangeur 104. Ce signal -V(t) obtenu en sortie du bloc 110 excite l'une des électrodes (par exemple l'électrode 4a de capacité C1) du doublet capacitif D3 décrit dans les figures 1 à 4 et dans lesquelles il est référencé 3. La seconde électrode de ce doublet capacitif D3 (l'électrode 4b de capacité C2) est connectée à la sortie de l'amplificateur 102 et donc excitée par le signal +V(t). Elle est connectée, d'autre part, à la capacité C1 réalisée par l'électrode 4a. Ces deux capacités C1 et C2 sont connectées en pont à l'amplificateur 112. Le signal obtenu en sortie dudit pont est:

$$Vs(t) = \frac{C1(t) - C2(t)}{C1(t) + C2(t)} \sin(wt).$$

L'information intéressante pour déterminer la tension du fil étant contenue dans l'amplitude du signal Vs(t), on effectue une démodulation d'amplitude au moyen d'une multiplication du signal Vs(t) par la sinusoïde pure Sin(wt) d'amplitude constante, cette multiplication étant réalisée notamment par l'amplificateur 112. Le signal $\frac{C1(t) - C2(t)}{C1(t) + C2(t)}$ recherché est alors obtenu par filtrage "passe-bas" de la composante sinusoïdale haute-fréquence.

De façon plus précise, la sortie de l'amplificateur 102 est connectée sur l'entrée d'un amplificateur 114. Les sorties des amplificateurs 112 et 114 sont connectées sur le mélangeur 116 dont le signal de sortie est filtré par un filtre passe-bas 118. Le signal Vout(t) alors obtenu en sortie de ce filtre 118 est le signal recherché ; il a pour expression :

$$Vout(t) = \frac{C1(t) - C2(t)}{C1(t) + C2(t)}.$$

On effectue alors en 120 une analyse spectrale de ce signal Vout(t) à partir de laquelle on détermine la valeur de tension du fil.

Parallèlement aux capacités C1 et C2 du doublet capacitif D3, les capacités C1 et C2 du doublet capacitif D13 (référencé 13 dans les figures 3 et 4) sont connectées respectivement à la sortie de la boucle 103 et à la sortie de l'amplificateur 102. Ces capacités sont en outre connectées en pont à l'entrée de l'amplificateur 122 dont la sortie est reliée à un mélangeur 124. La forme des signaux obtenus en sortie des connexions en pont de C1 et C2 a déjà été décrite précédemment (pour le doublet D3) ; elle ne sera donc pas redécrite pour les doublets D13 et D17. Ce mélangeur 124 reçoit, sur une seconde entrée, le signal issu de l'amplificateur 114. Le signal obtenu en sortie dudit mélangeur 124 est filtré dans un filtre passe-bas 126 puis introduit dans le circuit 134 d'intercorrélation.

De la même façon que pour le doublet capacitif D13, les capacités C1 et C2 du doublet capacitif D17 (référencé 17 dans les figures 3 et 4) sont connectées, respectivement, à la sortie de la boucle 103 et à la sortie de l'amplificateur 102. De même, ces capacités sont connectées en pont à l'entrée de l'amplificateur 128. La sortie de cet amplificateur 128 est connectée sur une entrée du mélangeur 130 qui reçoit, sur une seconde entrée, le signal issu de l'amplificateur 114. La sortie de ce mélangeur 130 est connectée à un filtre passe-bas 132. Le signal obtenu en sortie de ce filtre 132 est introduit dans le bloc 134 d'intercorrélation où est calculée la fonction Cxy(t). Le circuit 136 permet de déterminer la position du pic d'intercorrélation et ainsi d'en déduire la vitesse de défilement du fil.

Ce synoptique de la figure 5 correspond à un dispositif permettant à la fois la mesure de la tension et la mesure de la vitesse de défilement. Cependant, on comprendra que le synoptique du dispositif pour mesurer la tension serait décrit par les références D3 et 100 à 120 et que le dispositif pour mesurer la vitesse de défilement serait décrit par les références 100 à 110, 114, D13, D17 et 122 à 136.

## Revendications

1. Procédé de mesure sans contact de la tension et/ou de la vitesse de défilement d'un fil isolant (8) à l'aide d'au moins un capteur (3, 13, 17) sans contact, caractérisé en ce que, ce capteur comprenant des premiers et seconds moyens conducteurs plans (2, 4a/4b) séparés par une couche d'air (6) de permittivité po dans laquelle défile le fil, il consiste à déterminer des perturbations de la permittivité de la couche d'air dûes à des fluctuations de masse linéique et de position du fil isolant lors de son défilement dans ladite couche d'air.

2. Dispositif de mesure sans contact de la tension d'un fil isolant mettant en oeuvre le procédé selon la revendication 1, caractérisé en ce que les premiers moyens conducteurs plans comportent une électrode commune (2) et les seconds moyens conducteurs plans comportent une paire d'électrodes (4a/4b) formant avec l'électrode commune, un doublet capacitif (3) de capacité respective C1 et C2, cette paire d'électrodes comportant une première et une seconde électrodes ayant chacune une forme de triangle rectangle complémentaire l'un de l'autre.

3. Dispositif selon la revendication 2, caractérisé en ce qu'il comporte des moyens de traitement pour déterminer, par une analyse spectrale d'un signal

$\dfrac{C1 - C2}{C1 + C2}$, une fréquence de vibration du fil défilant dans la couche d'air située, respectivement, entre l'électrode commune et la première électrode de capacité C1 et entre l'électrode commune et la seconde électrode de capacité C2.

4. Dispositif de mesure sans contact de la vitesse de défilement d'un fil isolant mettant en oeuvre le procédé selon la revendication 1, caractérisé en ce que les premiers moyens conducteurs plans comportent au moins deux électrodes communes (12, 16) et les seconds moyens conducteurs plans comportent une première et une seconde paires d'électrodes (14a/14b, 18a/18b) formant, avec leur électrode commune respective, un premier et un second doublets capacitifs (13, 17) disposés parallèlement et à une distance D l'un de l'autre, chaque électrode desdites paires d'électrodes étant de forme rectangulaire, positionnée perpendiculairement à la direction de défilement du fil.

5. Dispositif selon la revendication 4, caractérisé en ce qu'il comporte des moyens de traitement pour déterminer la vitesse V de défilement définie par V=D/$\Delta$T où $\Delta$T est un décalage temporel x(t) engendré par le premier doublet capacitif et un second signal aléatoire y(t) engendré par le second doublet capacitif et est déterminé à partir d'une relation d'intercorrélation Cxy(T) entre les premiers et seconds signaux aléatoires définie par Cxy(T)=Cxx(T- $\Delta$T).

6. Dispositif de mesure sans contact de la tension et de la vitesse de défilement d'un fil isolant, mettant en oeuvre le procédé selon la revendication 1, caractérisé en ce que les premiers moyens conducteurs plans comportent une première, une seconde et une troisième électrodes communes (2, 12, 16) et les seconds moyens conducteurs plans comportent une première, une seconde et une troisième paires d'électrodes (4a/4b, 14a/14b, 18a/18b), chaque paire d'électrodes formant, avec son électrode commune respective, un premier, un second et un troisième doublets capacitifs (3, 13, 17), les électrodes des premier et troisième doublets capacitifs étant de forme rectangulaire, positionnés perpendiculairement à la direction de défilement du fil et étant apte à assurer, à l'aide de moyens de traitement, la détermination de la vitesse de défilement dudit fil, les électrodes du second doublet capacitif disposé entre le premier et le troisième doublets capacitifs ayant chacune une forme de triangle rectangle complémentaire l'un de l'autre et étant apte à assurer, à l'aide des moyens de traitement, la détermination de la tension du fil.

7. Dispositif selon la revendication 6, caractérisé en ce que la première, la seconde et la troisième électrodes communes sont réalisées sur un même premier substrat et en ce que la première, la seconde et la troisième paires d'électrodes sont réalisées sur un même second substrat.

8. Dispositif selon l'une quelconque des revendications 2 à 7, caractérisé en ce que chacun des premiers et seconds moyens conducteurs plans sont sérigraphiés sur un verre époxy.

FIG. 1

FIG. 2

FIG. 3

FIG. 4

FIG. 5

EP 0 601 920 A1

Office européen
des brevets

**RAPPORT DE RECHERCHE EUROPEENNE**

Numero de la demande

EP 93 40 2936

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.5) |
|---|---|---|---|
| A | NUCLEAR INSTRUMENTS AND METHODS IN PHYSICS RESEARCH<br>vol. A281, no. 3 , 15 Septembre 1989 ,<br>AMSTERDAM, NORTH-HOLLAND<br>pages 652 - 653 XP000067895<br>ERIC R. MUELLER 'A Simple Method to Measure Wire Tension in Multiwire Chambers'<br>* figure 1 *<br>--- | 1,6 | G01L5/04<br>G01D5/24 |
| A | US-A-4 568 875 (PISO ET AL.)<br>* colonne 1, ligne 17 - ligne 24 *<br>* colonne 2, ligne 15 - ligne 17 *<br>--- | 1,6 | |
| A | US-A-3 312 892 (A. PARNES)<br>* figures 2,5 *<br>----- | 2-4,6 | |
| | | | **DOMAINES TECHNIQUES RECHERCHES (Int.Cl.5)**<br><br>G01L<br>G01D |

Le présent rapport a été établi pour toutes les revendications

| Lieu de la recherche | Date d'achèvement de la recherche | Examinateur |
|---|---|---|
| LA HAYE | 23 Février 1994 | Lut, K |